# EUROPEAN PATENT APPLICATION

(11) **EP 3 214 745 A1**
(43) Date of publication of application: **06.09.2017**
(21) Application number: 15856034.2
(22) Date of filing: 27.10.2015
(51) Int. Cl.: H02K 41/03, H02K 33/16

(54) **LINEAR ACTUATOR**

(30) Priority: 29.10.2014 JP 2014220137
(71) Applicant: KYB Corporation, Tokyo 105-6111 (JP)
(72) Inventor: SATOU, Kousuke, Tokyo 105-6111 (JP)
(74) Representative: Grünecker Patent- und Rechtsanwälte PartG mbB
(86) International application number: PCT/JP2015/080285
(87) International publication number: WO 2016/068148

(57) **Abstract**

A linear actuator (100) includes: a first tube (10) provided with coils (41) placed there inside, the coils (41) being held by a yoke (40); a second tube (20) mounted on an outer circumference of the first tube (10); a rod (30) fixed to an end of the second tube (20) at one end; and permanent magnets (31) held by the rod (30) while being lined up in an axial direction. When the first tube (10) and the second tube (20) are at a fully contracted position, a gap (S) is provided between an end face (21B) of an outer tube (21) of the second tube (20) and an opposing face (11C) of a base portion (11) of the first tube (10).

## Description

### TECHNICAL FIELD

The present invention relates to a linear actuator that is extended and contracted in an axial direction by an electromagnetic force.

### BACKGROUND ART

JP 2014-27740A discloses a linear actuator in which one tube and another tube are relatively displaced, in an axial direction, by an electromagnetic force that is generated between coils provided in one tube and permanent magnets provided in another tube. A fully contracted position of this linear actuator is restricted by contact between a base, which is provided with a joint shaft, and an open end of another tube.

### SUMMARY OF INVENTION

With the linear actuator disclosed in JP 2014-27740A, the site of contact between the base and another tube is exposed to the outside. Therefore, if foreign substances and the like are accumulated at this site, there is a possibility that the base and another tube fail to come into contact with each other, thereby changing the fully contracted position of the linear actuator.

The present invention aims to stabilize a fully contracted position of a linear actuator.

According to one aspect of the present invention, a linear actuator includes: a first tube provided with a plurality of coils placed there inside, the plurality of coils being held by a tubular yoke; a second tube mounted on an outer circumference of the first tube so as to be relatively displaceable in an axial direction; a rod fixed to an end of the second tube at one end so as to be movable in the yoke in the axial direction; and a plurality of permanent magnets held by the rod while being lined up in the axial direction, the plurality of permanent magnets being arranged so as to oppose the plurality of coils. The second tube includes an outer tube portion into which the first tube is inserted from one end side. The first tube includes: an inner tube portion that is inserted into the outer tube portion; and a large diameter portion that is continuous with the inner tube portion in the axial direction, the large diameter portion having a larger diameter than that of the inner tube portion and opposing the one end side of the outer tube portion in the axial direction. When the first tube and the second tube are at a fully contracted position, a gap is provided between the one end side of the outer tube portion and the large diameter portion.

### BRIEF DESCRIPTION OF DRAWINGS

FIG. 1 is a cross-sectional view of a linear actuator in a contracted state according to an embodiment of the present invention, taken along an axial direction.
FIG. 2 is a cross-sectional view of the linear actuator in an extended state according to the embodiment of the present invention, taken along the axial direction.

### DESCRIPTION OF EMBODIMENTS

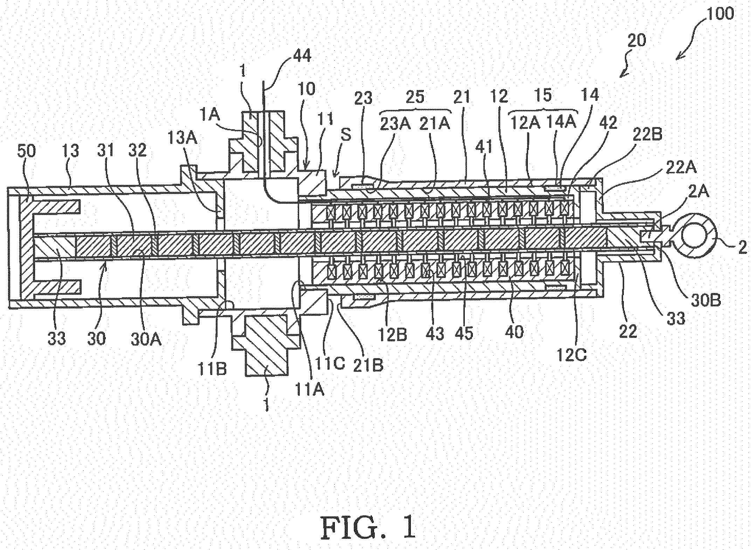

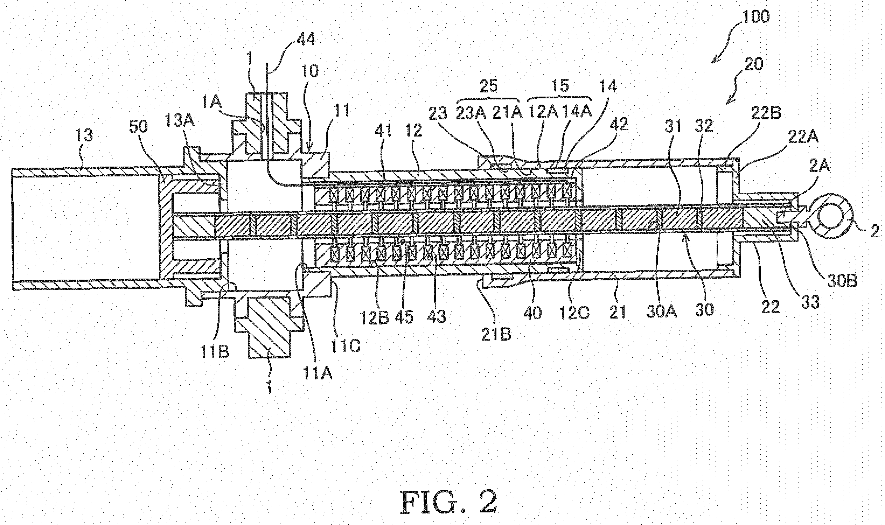

The following describes a linear actuator 100 according to an embodiment of the present invention with reference to FIGs. 1 and 2.

The linear actuator 100 includes a first tube 10, a second tube 20 that is slidably mounted on an outer circumference of the first tube 10, a rod 30 that is fixed to an end of the second tube 20 and holds permanent magnets 31, and a yoke 40 that is fit inside the first tube 10 and holds coils 41 opposing the permanent magnets 31.

In the linear actuator 100, a thrust (an electromagnetic force) that drives the rod 30 in an axial direction is generated in accordance with a current flowing through the coils 41, and the first tube 10 and the second tube 20 are relatively displaced according to the thrust. This causes the linear actuator 100 to extend and contract between a fully contracted position shown in FIG. 1 and a fully extended position shown in FIG. 2.

The first tube 10 includes a base portion 11 serving as a large diameter portion, an inner tube 12 serving as an inner tube portion that is fixed to one end side of the base portion 11, and a guide tube 13 that is fixed to the other end side of the base portion 11.

The base portion 11 is a tubular member that is open at both ends. A pair of trunnion shafts 1, which serves as a joint shaft projecting in a radial direction, is fixed to an outer circumference of the base portion 11. The pair of trunnion shafts 1 is rotatably supported by an external member (not shown). Accordingly, the linear actuator 100 is held in such a manner that it is rotatable with respect to the external member. One of the trunnion shafts 1 has a through hole 1A. Alternatively, both of the trunnion shafts 1 may have the through hole 1A. That is to say, at least one of the pair of trunnion shafts 1 has the through hole 1A.

The inner tube 12 is smaller in outer diameter than the base portion 11. One end of the inner tube 12 is fixedly fit on a first inner circumferential surface 11A of the base portion 11. That is to say, the inner tube 12 is supported by the base portion 11 at one end. Regarding the mechanism of coupling the inner tube 12 and the base portion 11 to each other, they are not limited to being fit to each other; they may be, for example, screwed to each other. Similarly, one end of the guide tube 13 is fixedly fit on a second inner circumferential surface 11B of the base portion 11. That is to say, the guide tube 13 is supported by the base portion 11 at one end. In the guide tube 13, its end fixed to the base portion 11 has a ring-shaped projected portion 13A that projects inward. Regarding the mechanism of coupling the guide tube 13 and the base portion 11 to each other, they are not limited to being fit to each other; they may be, for example, screwed to each other.

The second tube 20 includes an outer tube 21 serving as an outer tube portion having a shape of a hollow cylinder, and a cap 22 serving as a closing portion. The outer tube 21 is open at both ends, and the inner tube 12 of the first tube 10 is slidably inserted into the outer tube 21 from one end side of the outer tube 21. The cap 22 is attached to the other end side of the outer tube 21.

The cap 22 includes a cap main body 22A and a projected portion 22B that has a shape of a hollow cylinder. The projected portion 22B projects from the cap main body 22A along an inner circumference of the outer tube 21. A joint member 2, with which an external device (not shown) is joined, is fixed to an outer side surface of the cap main body 22A. An outer circumference of the projected portion 22B has a male screw portion (not shown). An inner circumference of the other end side of the outer tube 21 has a female screw portion (not shown) that corresponds to the male screw portion. The outer tube 21 and the cap 22 are screwed to each other via these male screw portion and female screw portion. As a result, the other end of the second tube 20 is closed by the cap 22. Regarding the mechanism of coupling the outer tube 21 and the cap 22 to each other, they are not limited to being screwed to each other; they may be, for example, fit to each other.

The linear actuator 100 includes a first linear guide portion 15 and a second linear guide portion 25 for supporting the first tube 10 and the second tube 20 in such a manner that the first tube 10 and the second tube 20 can be relatively displaced in the axial direction.

A ring-shaped first bearing 14 is mounted on an outer circumference of the free end side of the inner tube 12. A bearing surface (an outer circumferential surface) 14A of the first bearing 14 is in sliding contact with an inner circumferential surface 21A of the outer tube 21. The first linear guide portion 15 is composed of an outer circumferential surface 12A of the inner tube 12 and the bearing surface 14A of the first bearing 14.

A ring-shaped second bearing 23 is mounted on an inner circumference of the open end side of the outer tube 21. A bearing surface (an inner circumferential surface) 23A of the second bearing 23 is in sliding contact with the outer circumferential surface 12A of the inner tube 12. The second linear guide portion 25 is composed of the inner circumferential surface 21A of the outer tube 21 and the bearing surface 23A of the second bearing 23.

During the extension and contraction of the linear actuator 100, in the first linear guide portion 15, the bearing surface 14A of the first bearing 14 is in sliding contact with the inner circumferential surface 21A of the outer tube 21. On the other hand, in the second linear guide portion 25, the bearing surface 23A of the second bearing 23 is in sliding contact with the outer circumferential surface 12A of the inner tube 12. Accordingly, the inner tube 12 and the outer tube 21 smoothly slide on each other. The outer circumferential surface 12A of the inner tube 12 and the inner circumferential surface 21A of the outer tube 21 oppose each other, with no gap therebetween, via the first bearing 14 and the second bearing 23.

The rod 30 is a pole-like member with a hollow portion 30A. One end of the rod 30 is fixed to the inner side of the cap 22 that closes the other end of the second tube 20. The other end of the rod 30 is fixed to a rod guide 50 that is slidably placed inside the guide tube 13. As the rod guide 50 is mounted on the other end of the rod 30, the guide tube 13 and the rod 30 are reliably rendered coaxial. This prevents the end of the rod 30 from swinging in the radial direction during the extension and contraction of the linear actuator 100.

The plurality of permanent magnets 31 are held in the hollow portion 30A of the rod 30 while being lined up in the axial direction. Each permanent magnet 31 has a columnar shape, and is magnetized in such a manner that its N pole and S pole are positioned in the axial direction. Neighboring permanent magnets 31 are placed in such a manner that their ends of the same polarity oppose each other. Furthermore, a yoke 32 is provided between neighboring permanent magnets 31. Note that the yokes 32 need not necessarily be provided, and neighboring permanent magnets 31 may be in contact with each other. Furthermore, non-magnetic elements 33 serving as non-magnetic portions are disposed at both ends inside the hollow portion 30A. That is to say, the hollow portion 30A is fixed to the cap 22 and the rod guide 50 via the non-magnetic elements 33.

The rod 30 is fixed to the cap 22 by a screw portion 2A of the joint member 2 in the state where an end face 30B of the rod 30 is in tight surface contact with an inner side surface of the cap main body 22A. Furthermore, an outer circumferential surface of a part of the rod 30 in which one of the non-magnetic elements 33 is disposed is out of contact with the cap 22, that is to say, distanced from the cap 22 by a predetermined gap. As such, the position of the rod 30 is determined only by the surface contact between the end face 30B of the rod 30 and the cap main body 22A. Therefore, centering of the rod 30 is easily performed. The rod 30 is not limited to being fixed to the cap 22 by the screw portion 2A of the joint member 2; it may be fixed to the cap 22 by a coupling member that is different from the joint member 2. In this case, the joint member 2 and the cap 22 may be formed integrally.

The yoke 40 having a shape of a hollow cylinder is mounted on an inner circumferential surface 12B of the inner tube 12. At the free end side of the inner tube 12, a restriction portion 12C is provided on the inner circumferential surface 12B. The restriction portion 12C has a shape of a circular ring, and projects radially inward. The yoke 40 is inserted into the inner tube 12 to the point where it is in contact with the restriction portion 12C. As shown in FIG. 1, the restriction portion 12C opposes the cap main body 22A in the axial direction. Therefore, when the first tube 10 and the second tube 20 are at the fully contracted position of the linear actuator 100, a tip of the projected portion 22B that projects from the cap main body 22A is in contact with a surface of the restriction portion 12C opposite to a surface of the restriction portion 12C that is in contact with the yoke 40. The restriction portion 12C opposing the cap main body 22A in the axial direction serves as an opposing portion.

The yoke 40 has an insertion hole 45 through which the rod 30 is inserted in the axial direction. An inner circumferential surface of the yoke 40 has ring-shaped recesses 43 that are recessed toward an outer circumference of the yoke 40. The plurality of coils 41 are fixed inside the ring-shaped recesses 43, and are lined up in the axial direction so as to oppose the permanent magnets 31.

The outer circumference of the yoke 40 has grooves 42 each running in a direction of an axis line. Wires 44 from the plurality of coils 41 are inserted into the grooves 42. Although not illustrated, the grooves 42 are provided at three or more positions with a circumferential interval therebetween. Instead of being provided on an outer circumferential surface of the yoke 40, the grooves 42 may be provided on the inner circumferential surface 12B of the inner tube 12. The grooves 42 may be provided on both of the outer circumferential surface of the yoke 40 and the inner circumferential surface 12B of the inner tube 12.

The wires 44 from the plurality of coils 41 are drawn to the outside via the grooves 42 and the through hole 1A provided in the trunnion shafts 1. Once the wires 44 have been drawn to the outside, they are connected to a controller (not shown). The controller controls the thrust generated by the linear actuator 100 and the directions of the generated thrust (the extension and contraction directions) by controlling the intensity and phase of the current supplied to the coils 41.

A description is now given of the operation of the linear actuator 100.

In the linear actuator 100, when the coils 41 are supplied with a current of a predetermined direction, a thrust that drives the rod 30 in one direction (a rightward direction in FIG. 1) is generated. Along with the driving of the rod 30 in one direction, the linear actuator 100 extends as the outer tube 21 of the second tube 20 moves while sliding with respect to the inner tube 12 of the first tube 10.

As shown in FIG. 2, when the linear actuator 100 has extended to the fully extended position, the rod guide 50 is in contact with a side surface of the projected portion 13A of the guide tube 13, thereby restricting a further movement of the rod 30. As such, the rod guide 50 functions as a stopper.

On the other hand, when the coils 41 are supplied with a current with a phase opposite to a phase of the current supplied during the extension, a thrust that drives the rod 30 in the other direction (a leftward direction in FIG. 2) is generated. Along with the driving of the rod 30 in the other direction, the linear actuator 100 contracts as the outer tube 21 of the second tube 20 moves while sliding with respect to the inner tube 12 of the first tube 10.

As shown in FIG. 1, when the linear actuator 100 has contracted to the fully contracted position, the tip of the projected portion 22B that projects from the cap main body 22A is in contact with the restriction portion 12C of the inner tube 12, thereby restricting a further movement of the rod 30. As such, the cap main body 22A and the restriction portion 12C function as stoppers. Regarding the specific configurations of the stoppers, the projected portion 22B that projects from the cap main body 22A may be replaced with a projected portion that projects from the restriction portion 12C toward the cap main body 22A, or both of the cap main body 22A and the restriction portion 12C may have a projected portion. The stoppers may be configured in any manner as long as the movement of the rod 30 is restricted by the cap main body 22A and the restriction portion 12C. The projected portion may be provided on an outer circumferential edge of the cap main body 22A or the restriction portion 12C, or may be provided near the rod 30. In order for the projected portion to ensure a contact area, it is preferable to provide the projected portion on the outer circumferential edge. For example, a buffer member may be provided on a surface of the cap main body 22A or the restriction portion 12C to lessen contact-induced shock.

As shown in FIG. 1, when the linear actuator 100 is at the fully contracted position, a gap S is provided between an end face 21B of the outer tube 21 at one end side of the outer tube 21 and an opposing face 11C of the base portion 11. The opposing face 11C opposes the end face 21B in the axial direction. As such, when the linear actuator 100 is at the fully contracted position, the first tube 10 and the second tube 20 are out of contact with each other, that is to say, distanced from each other by the gap S, at the site at which the first tube 10 and the second tube 20 are closest to each other and which is exposed to the outside. Therefore, even if foreign substances and the like are accumulated at this site, the presence of the sufficient gap S can prevent a change in the fully contracted position of the linear actuator. It is preferable that the size of the gap S be approximately 4 mm to 6 mm to allow for accumulation of foreign substances and the like to a certain extent. Note that the end face 21B of the outer tube 21 is not limited to opposing the opposing face 11C of the base portion 11; it may oppose a face of another member that constitutes the first tube 10.

As shown in FIG. 1, when the linear actuator 100 is at the fully contracted position, a part of the permanent magnets 31 extends out from the coils 41 fixed to the yoke 40 toward the cap 22. With the part of the permanent magnets 31 thus positioned beyond the coils 41 in the extension direction of the linear actuator 100 at the fully contracted position, the thrust (the electromagnetic force) for driving the rod 30 is easily generated in causing the linear actuator 100 to extend from the fully contracted position.

The foregoing embodiment achieves the following effects.

In the present embodiment, when the first tube 10 and the second tube 20 are at the fully contracted position, the contact between the cap main body 22A of the cap 22 and the restriction portion 12C of the inner tube 12 restricts relative displacements of the first tube 10 and the second tube 20, and the gap S is provided between the end face 21B of the outer tube 21 at one end side of the outer tube 21 and the opposing face 11C of the base portion 11. That is to say, members that restrict the fully contracted position of the linear actuator are provided at positions where they are not exposed to the outside. On the other hand, the gap is provided between members that are exposed to the outside, oppose each other in the axial direction, and are relatively displaced, even when the linear actuator is at the fully contracted position. This makes the linear actuator 100 insusceptible to accumulation of foreign substances and the like, and enables stabilization of the fully contracted position of the linear actuator 100.

Conventionally, the outer tube 21 is in contact with the base portion 11 when the first tube 10 and the second tube 20 are at the fully contracted position, and thus has a sufficient thickness to ensure its strength. In contrast, according to the present embodiment, the outer tube 21 does not come into contact with the base portion 11, and thus can be reduced in thickness. Therefore, the linear actuator 100 can be reduced in outer diameter and weight.

Further, one of the cap main body 22A of the cap 22 and the restriction portion 12C of the inner tube 12 has a projected portion that projects toward the other. As the projected portion that projects from one of the cap main body 22A and the restriction portion 12C functions as a stopper, a degree of freedom in designing can be increased. Furthermore, the fully contracted position can be freely set by adjusting the length of the projected portion.

Further, the projected portion is provided on the outer circumferential edge of the cap main body 22A of the cap 22 or the restriction portion 12C of the inner tube 12. The projected portion can ensure a larger contact area when it is provided on the outer circumferential side than when it is provided on the inner circumferential side. Therefore, by providing the projected portion on the outer circumferential edge, the area of the site of contact is increased, and the strength of the site of contact can be ensured. As a result, the fully contracted position of the linear actuator 100 can be stabilized.

Further, the cap 22 and the outer tube 21 are coupled to each other by the projected portion 22B provided on the outer circumferential side of the cap main body 22A. That is to say, the projected portion 22B not only has a function of a stopper, but also has a function of a coupling member. As the projected portion 22B has these two functions, the configuration of the linear actuator 100 can be simplified.

When the first tube 10 and the second tube 20 are at the fully contracted position, a part of the permanent magnets 31 projects farther toward the cap 22 than the coils 41 do. That is to say, when the linear actuator 100 is at the fully contracted position, the part of the permanent magnets 31 in the rod 30 is positioned beyond the coils 41 fixed to the yoke 40 in the extension direction of the linear actuator 100. Therefore, the thrust (the electromagnetic force) for driving the rod 30 is easily generated in causing the linear actuator 100 to extend from the fully contracted position. As a result, responsiveness can be improved.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2014-220137 filed with the Japan Patent Office on October 29, 2014, the entire contents of which are incorporated into this specification.

## Claims

1. A linear actuator, comprising:
a first tube provided with a plurality of coils placed there inside, the plurality of coils being held by a tubular yoke;
a second tube mounted on an outer circumference of the first tube so as to be relatively displaceable in an axial direction;
a rod fixed to an end of the second tube at one end so as to be movable in the yoke in the axial direction; and
a plurality of permanent magnets held by the rod while being lined up in the axial direction, the plurality of permanent magnets being arranged so as to oppose the plurality of coils,
wherein
the second tube includes an outer tube portion into which the first tube is inserted from one end side,
the first tube includes: an inner tube portion that is inserted into the outer tube portion; and a large diameter portion that is continuous with the inner tube portion in the axial direction, the large diameter portion having a larger diameter than that of the inner tube portion and opposing the one end side of the outer tube portion in the axial direction, and
when the first tube and the second tube are at a fully contracted position, a gap is provided between the one end side of the outer tube portion and the large diameter portion.

2. The linear actuator according to claim 1,
wherein
the second tube includes a closing portion for closing the other end side of the outer tube portion,
the first tube includes an opposing portion opposing the closing portion in the axial direction, and
when the first tube and the second tube are at the fully contracted position, contact between the closing portion and the opposing portion restricts relative displacements of the first tube and the second tube.

3. The linear actuator according to claim 2,
wherein
one of the closing portion and the opposing portion has a projected portion projecting toward another of the closing portion and the opposing portion.

4. The linear actuator according to claim 3,
wherein
the projected portion is provided on an outer circumferential edge of the closing portion or the opposing portion.

5. The linear actuator according to claim 2,
wherein
a projected portion projecting toward the opposing portion is provided on an outer circumferential side of the closing portion, and
the closing portion and the outer tube portion are coupled to each other with the projected portion.

6. The linear actuator according to claim 1,
wherein
when the first tube and the second tube are at the fully contracted position, a part of the permanent magnets extends out from the coils toward the other end side of the second tube.

7. The linear actuator according to claim 1,
wherein
a joint shaft rotatably supported by an external member is mounted on the large diameter portion.
